# EUROPÄISCHE PATENTANMELDUNG

(11) **EP 3 251 919 A1**
(43) Veröffentlichungstag der Anmeldung: **06.12.2017**
(21) Anmeldenummer: 17172288.7
(22) Anmeldetag: 22.05.2017
(51) Int. Cl.: B62B 1/12, B62B 1/26

(54) **TRANSPORTVORRICHTUNG FÜR TAUCHSPORTAUSRÜSTUNG**

(30) Priorität: 03.06.2016 DE 102016110306
(71) Anmelder: Bauer, Torsten, 24558 Henstedt-Ulzburg Schleswig-Holstein (DE)
(72) Erfinder: Bauer, Torsten, 24558 Henstedt-Ulzburg Schleswig-Holstein (DE)
(74) Vertreter: Schlimme, Wolfram

(57) **Zusammenfassung**

Eine Transportvorrichtung für Tauchsportausrüstung, mit einem ebenen Rahmengrundkörper (1), zwei Rädern (26, 27), und einer Bodenstützplatte (30) zum Abstützen von zumindest zwei in einem Aufnahmebereich (3) oberhalb der Bodenstützplatte (30) aufnehmbaren Atemgasflaschen (4), wobei eine erhöhte Positionierbarkeit der Atemgasflaschen (4) vorgesehen ist, zeichnet sich dadurch aus, dass die Transportvorrichtung zwischen einem Betriebszustand (A), in dem die Transportvorrichtung einen vorzugsweise einachsigen Transportwagen bildet, und einem Transport- und Lagerzustand (B) umbaubar ist, wozu die Räder (26, 27) am Rahmengrundkörper (1) abnehmbar anbringbar oder schwenkbar angebracht sind und wozu die Bodenstützplatte (30) am Rahmengrundkörper (1) abnehmbar anbringbar oder schwenkbar angebracht ist, und dass die Transportvorrichtung mit einer im Aufnahmebereich (3) für die Atemgasflaschen (4) oder unmittelbar oberhalb dieses Aufnahmebereichs (3) am Rahmengrundkörper (1) abnehmbar anbringbaren oder schwenkbar angebrachten Hilfsstützplatte (5) versehen ist.

## Beschreibung

### TECHNISCHES GEBIET

Die vorliegende Erfindung betrifft eine Transportvorrichtung für Tauchsportausrüstung gemäß dem Oberbegriff des Patentanspruchs 1. Insbesondere betrifft die Erfindung eine Transportvorrichtung, die zwischen einem Betriebszustand und einem Transport- und Lagerzustand umbaubar ist und die in ihrem Betriebszustand einen vorzugsweise einachsigen Transportwagen bildet.

### HINTERGRUND DER ERFINDUNG

Viele Sporttaucher fahren mit ihrem PKW zu dem Ort, an dem sie zum Tauchen in ein Gewässer einsteigen wollen. Es ist jedoch nur selten möglich, mit dem PKW direkt an das Gewässer oder einen Bootsanlegesteg heran zu fahren mit der Folge, dass die schwere Tauchausrüstung von einem Parkplatz des PKW zum Gewässer getragen werden muss. Die Tauchausrüstung umfasst nämlich zusätzlich zu den Atemgasflaschen mindestens noch die Tauchbekleidung, einen Lungenautomaten und einen Gewichtsgürtel. Hilfreich für den Transport dieser umfangreichen und schweren Ausrüstung wäre zwar ein geeigneter Transportwagen, doch ist dafür in einem PKW, in dem die Tauchausrüstung für aus Gründen der Sicherheit regelmäßig zwei an einem Tauchgang beteiligte Taucher ("Buddy-Prinzip") transportiert wird, kein freier Raum mehr vorhanden.

### STAND DER TECHNIK

Aus der DE 296 13 184 U1 ist ein Transportwagen für Pressluftflaschen für Sporttaucher bekannt. Dieser bekannte Transportwagen ist ähnlich wie eine Sackkarre aufgebaut, weist allerdings spezielle Halterungen zur Aufnahme und zur Fixierung einer Pressluftflasche auf.

Die Größe dieses bekannten Transportwagens gestattet es jedoch nicht, dass dieser Transportwagen zusammen mit der Tauchausrüstung für zwei Taucher in einem PKW-Kofferraum oder auf der Ladefläche eines Kombi-PKW transportiert werden kann. Des Weiteren ist es nicht möglich, mit diesem bekannten Transportwagen zwei Pressluftflaschen und die umfangreiche sonstige Tauchausstattung für zwei Taucher zu transportieren.

Die DE 20 2015 005 662 U1 zeigt einen Transportwagen für Tauchzubehör, der einen Auszug zur Ablage von Tauchflaschen bildet, welcher im stehenden Zustand des Transportwagens höhenverstellbar ist. Dadurch soll das Anlegen der Tauchflasche auch ohne fremde Hilfe ermöglicht werden, wenn der Auszug mit der Tauchflasche in eine erhöhte Position verschoben worden ist. Dieser Transportwagen ist - bis auf den verschiebbaren Auszug für die Tauchflasche - ein starres Gebilde in Form einer Sackkarre.

Die DE 20 2009 000 417 U1 zeigt eine Transportkarre für Atemgasflaschen, die im aufrecht stehenden Zustand mittels ausklappbarer und höhenverstellbarer Stützen anhebbar ist, so dass sich die Standfläche für die Atemgasflasche im angehobenen Zustand auf einer erhöhten Position befindet.

Die DE 20 2005 008 717 U1 zeigt und beschreibt eine Transporteinrichtung für Taucherausrüstungen in Form einer einachsigen Transportkarre. Im unteren Bereich der Transportkarre ist eine Aufnahmebox für Tauchzubehör vorgesehen und auf dem oberen Deckel der Aufnahmebox ist eine Halteeinrichtung für mindestens eine Atemgasflasche vorgesehen. Dabei wird die Atemgasflasche liegend transportiert.

Die DE 296 13 184 U1 zeigt und beschreibt einen einachsigen Transportwagen für eine Pressluftflasche, der eine Bodenstützplatte oder ein Bodenstützgerüst zum Abstellen der Pressluftflasche und ein oberes ringförmiges Halterungselement zum Umfassen des Flaschenkörpers aufweist.

Die FR 2 640 217 A1 zeigt und beschreibt ein einachsiges Fahrwerk mit einer ringförmigen Schelle, die um eine Atemgasflasche herumlegbar und an dieser befestigbar ist. Dadurch wird die Atemgasflasche selbst zu einer Transportkarre. Die Achse mit den Rädern ist bei dieser bekannten Vorrichtung abnehmbar.

### DARSTELLUNG DER ERFINDUNG

Aufgabe der vorliegenden Erfindung ist es daher, eine Transportvorrichtung für Tauchsportausrüstung anzugeben, die in der Lage ist, die Ausrüstung für zumindest zwei Taucher eines Buddy-Teams, also zumindest zwei Atemgasflaschen, zu transportieren und die derart zusammenlegbar ist, dass sie im Kofferraum eines PKW oder auf der Ladefläche eines Kombi-PKW zusammen mit der Tauchsportausrüstung für zumindest zwei Taucher transportiert werden kann. Zudem sollte die Transportvorrichtung das Aufsetzen der Atemgasflaschen erleichtern.

Diese Aufgabe wird gelöst durch die Transportvorrichtung mit den Merkmalen des Anspruchs 1.

Dazu ist erfindungsgemäß vorgesehen, dass die Transportvorrichtung zwischen einem Betriebszustand, in dem die Transportvorrichtung einen vorzugsweise einachsigen Transportwagen bildet, und einem Transport- und Lagerzustand umbaubar ist, wozu die Räder am Rahmengrundkörper abnehmbar anbringbar oder schwenkbar angebracht sind und wozu die Bodenstützplatte am Rahmengrundkörper abnehmbar oder schwenkbar angebracht ist, und dass die Transportvorrichtung mit einer im Aufnahmebereich für die Atemgasflaschen oder unmittelbar oberhalb dieses Aufnahmebereichs am Rahmengrundkörper abnehmbar anbringbaren oder schwenkbar angebrachten Hilfsstützplatte versehen ist.

Eine solche erfindungsgemäße Transportvorrichtung für Tauchsportausrüstung ist zwischen einem Betriebszustand und einem flachen Transport- und Lagerzustand umbaubar. Sie bildet in ihrem Betriebszustand einen vorzugsweise einachsigen Transportwagen und ist versehen mit einem im Wesentlichen ebenen Rahmengrundkörper, zumindest zwei am Rahmengrundkörper anbringbaren oder schwenkbar angebrachten Rädern, einer am Rahmengrundkörper anbringbaren oder schwenkbar angebrachten Bodenstützplatte zum Abstützen von zumindest zwei Atemgasflaschen und vorzugsweise zumindest einer Fixiereinrichtung für die Atemgasflaschen. Der Begriff Bodenstützplatte ist dabei nicht auf eine flächig geschlossene Platte beschränkt ist, sondern umfasst auch andere Bodenstützeinrichtungen, wie zum Beispiel eine gewichtssparend ausgebildete offene Rahmen- und Trägerstruktur zum Abstützen der Atemgasflaschen. Die Bodenstützplatte ist zudem vorzugsweise mit Ausnehmungen oder Vertiefungen zur Aufnahme eines Bodenabschnitts der Atemgasflaschen ausgestattet, um diese gegen seitliches Verrutschen zu fixieren.

Besonders von Vorteil ist das Vorsehen einer in einem Aufnahmebereich für die Atemgasflaschen oder unmittelbar oberhalb dieses Aufnahmebereichs am Rahmengrundkörper anbringbaren oder schwenkbar angebrachten Hilfsstützplatte.

### VORTEILE

Die erfindungsgemäße Transportvorrichtung lässt sich aufgrund ihrer Zerlegbarkeit und/oder Verschwenkbarkeit einzelner Elemente schnell und einfach aus dem Betriebszustand in den Transport- und Lagerzustand umbauen, in dem sie platzsparend im Kofferraum oder Laderaum eines PKW zusätzlich zur Tauchsportausrüstung untergebracht werden kann.

Diese Hilfsstützplatte, die angebracht beziehungsweise aus einer Stauposition in eine Arbeitsposition ausgeschwenkt und arretiert werden kann, wenn die Atemgasflaschen aus ihrem Aufnahmebereich entnommen worden sind, bildet bei aufrecht stehendem Transportwagen einen Tisch, auf dem die Atemgasflaschen abgestellt werden können und von dem aus sie vom Taucher übernommen werden können. Der Taucher muss sich dann nicht mehr bücken, um seine Atemgasflasche(n) auf seinen Rücken aufzunehmen und mit dem Tragegeschirr festzuschnallen, um sich anschließend mit der gesamten Last wieder zu erheben. Die Hilfsstützplatte verbessert somit die Ergonomie, indem sie eine den Rücken des Tauchers schonende Übernahme der Atemgasflasche(n) ermöglicht. Außerdem kann der Taucher vorbereitende Tätigkeiten an der/den Atemgasflasche(n) in bequemer Arbeitshöhe vornehmen ohne sich dazu bücken zu müssen.

Weitere bevorzugte und vorteilhafte Ausgestaltungsmerkmale der erfindungsgemäßen Transportvorrichtung sind Gegenstand der Unteransprüche 2 bis 8.

Vorzugsweise sind die schwenkbar am Rahmengrundkörper angebrachten Elemente im Transport- und Lagerzustand im Wesentlichen in der Ebene des Rahmengrundkörpers oder in einer dazu parallelen Ebene gelegen sind. Diese Ausführungsform ermöglicht es, einen besonders flachen Transport- oder Lagerzustand der Transportvorrichtung zu erzielen, in welchem sie beispielsweise flach auf den Boden eines PKW-Kofferraums oder -Laderaums gelegt werden kann.

Von Vorteil ist es auch, wenn zumindest ein am Rahmengrundkörper anbringbares oder schwenkbar angebrachtes Griffelement vorgesehen ist. Zwar kann grundsätzlich auch ein oberer Querholm des ebenen Rahmengrundkörpers als Griff für die Transportvorrichtung genutzt werden, doch ist es ergonomisch von Vorteil, wenn das Griffelement in Bezug auf den ebenen Rahmengrundkörper - wie bei einer Sackkarre - abgewinkelt ist. Zum Erreichen dieses Zwecks kann das Griffelement entweder am Rahmengrundkörper angebracht werden oder es kann schwenkbar am Rahmengrundkörper angeordnet sein. Die letztere Variante schließt auch ein, dass ein oberer, einen Querholm aufweisender Teil des Rahmengrundkörpers bezüglich des restlichen Rahmengrundkörpers verschwenkbar ist.

In einer bevorzugten Ausführungsform der Transportvorrichtung gemäß der Erfindung ist zumindest ein am Rahmengrundkörper, vorzugsweise an dessen vom Aufnahmebereich für die Atemgasflaschen abgewandter Seite, angebrachter oder anbringbarer Aufnahmebehälter für weitere Gegenstände der Tauchsportausrüstung vorgesehen. Dieser Aufnahmebehälter, der aus Gewichtsgründen beispielsweise überwiegend aus Textilmaterial bestehen kann, kann so ausgebildet sein, dass er an Vorrichtungen, die am Rahmengrundkörper vorgesehen sind, lösbar anbringbar ist. Zum Beispiel kann der Aufnahmebehälter mittels Haken, Ösen, Schäkeln oder Karabinern ausgestattet sein, die mit entsprechenden Elementen (Querholme, Ösen, Haken oder Ähnlichem) am Rahmengrundkörper funktional verbindbar sind.

Der Aufnahmebehälter kann, insbesondere wenn er vorwiegend aus Textilmaterial besteht, auch als Rucksack ausgebildet sein oder mit einem Tragegeschirr verbindbar sein, so dass er alternativ auch von der Person, die die Transportvorrichtung schiebt, auf dem Rücken getragen werden kann.

Vorzugsweise erstreckt sich die vom Aufnahmebereich für die Atemgasflaschen abgewandte Fläche der Bodenstützplatte im Betriebszustand der Transportvorrichtung in einer Ebene, die tangential zu den Rädern verläuft. Dies ermöglicht es, die Transportvorrichtung in einer aufrechten Position abzustellen, in der sich die Ebene des Rahmengrundkörpers im Wesentlichen vertikal erstreckt.

Vorteilhaft ist es auch, wenn sich die Bodenstützplatte im Betriebszustand der Transportvorrichtung in einem im Wesentlichen rechten Winkel zur Ebene des Rahmengrundkörpers erstreckt. Diese Ausgestaltung gewährleistet, dass die Ebene des Rahmengrundkörpers bei stehender Transportvorrichtung im Wesentlichen vertikal verläuft.

Eine besonders vorteilhafte Ausführungsform sieht vor, dass die Hilfsstützplatte in unterschiedlichen Höhen, bezogen auf eine aufrecht stehende Transportvorrichtung, anbringbar ist beziehungsweise, dass die Schwenkachse der Hilfsstützplatte in der Höhe verstellbar ist. Hierdurch kann die Position der Hilfsstützplatte an die Körpergröße und an die Bedürfnisse des Tauchers angepasst werden.

Besonders vorteilhaft ist es, wenn sich die am Rahmengrundkörper angebrachte Hilfsstützplatte beziehungsweise die aus einer Stauposition in eine Arbeitsposition ausgeschwenkte Hilfsstützplatte bei auf einer Standfläche aufrecht stehender Transportvorrichtung in einer Höhe von 60 cm bis 120 cm, vorzugsweise zwischen 75 cm und 100 cm, über der Standfläche der Transportvorrichtung horizontal erstreckt. Dadurch kann, insbesondere bei einer höhenveränderbaren Position der Hilfsstützplatte, erreicht werden, dass sich die Hilfsstützplatte immer in der Höhe des Steißbeins des Tauchers befindet, was eine besonders rückenschonende Übernahme der Atemgasflaschen ermöglicht.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine Seitenansicht einer erfindungsgemäßen Transportvorrichtung im Betriebszustand mit einer in einer Stauposition befindlichen Hilfsstützplatte;
- Fig. 2: eine Draufsicht auf die Transportvorrichtung aus Fig. 1 in deren Transport- und Lagerzustand und
- Fig. 3: eine Seitenansicht der Transportvorrichtung gemäß Fig. 1 mit der Hilfsstützplatte in ihrer Arbeitsposition.

### DARSTELLUNG VON BEVORZUGTEN AUSFÜHRUNGSBEISPIELEN

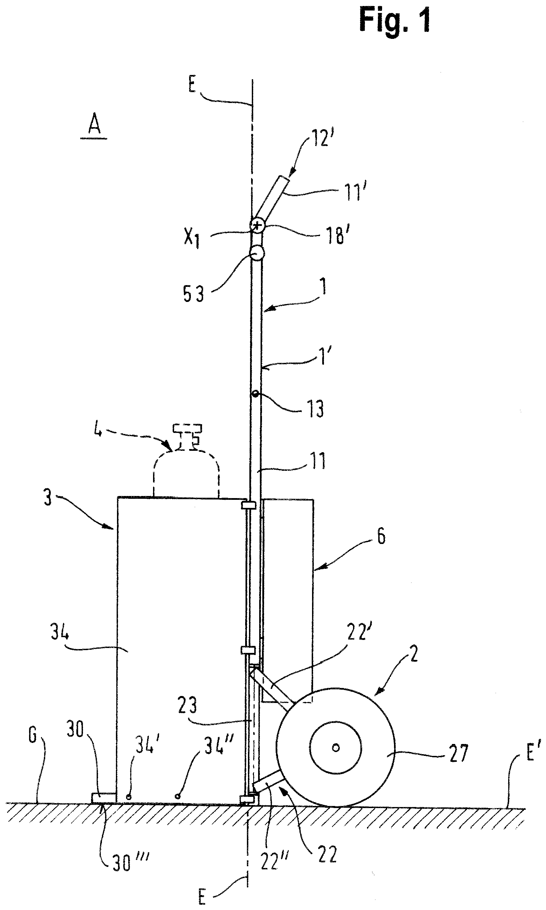

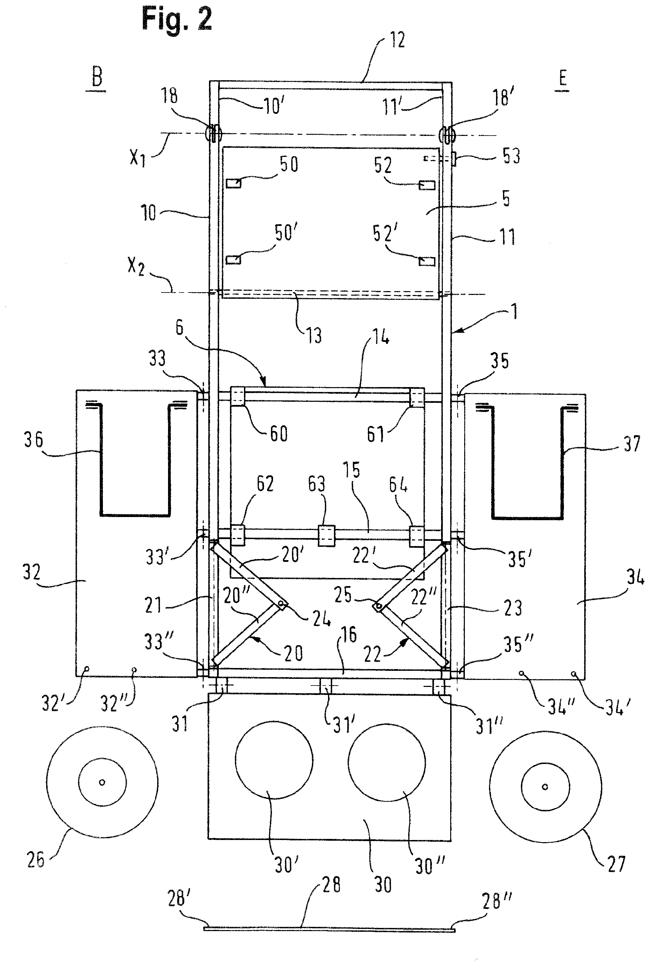

In Fig. 1 ist eine erfindungsgemäße Transportvorrichtung in ihrem ruhenden Betriebszustand A in der Seitenansicht dargestellt, in dem die zusammengebaute Transportvorrichtung aufrecht steht. Die Transportvorrichtung ist in Fig. 2 in ihrem teilweise zerlegten flachen Transport- und Lagerzustand B dargestellt.

Im zusammengebauten Betriebszustand A ist die Transportvorrichtung, wie in den Figuren beispielhaft dargestellt ist, als einachsige Karre, ähnlich einer Sackkarre ausgestaltet. Es ist jedoch vom Umfang der Erfindung gedeckt, die Transportvorrichtung auch anderweitig, beispielsweise als mehrachsiger Wagen, auszugestalten.

Die in den Figuren dargestellte Ausführungsform der erfindungsgemäßen Transportvorrichtung weist einen Rahmengrundkörper 1 auf, an dem diverse schwenkbare bzw. abnehmbare Elemente der Transportvorrichtung angebracht bzw. anbringbar sind. Der Rahmengrundkörper weist zwei (in Fig. 1 vertikal dargestellte) seitliche Längsträger 10, 11 auf, die über eine Mehrzahl von Querholmen 12, 13, 14, 15, 16 miteinander verbunden sind.

In dem in Fig. 1 unteren Bereich des Rahmengrundkörpers 1, also zwischen dem zweituntersten Querholm 15 und dem unteren Endquerholm 16, ist am ersten Längsträger und am zweiten Längsträger 10, 11 jeweils eine Radaufhängung 20, 22 schwenkbar angebracht. Die jeweilige Radaufhängung 20, 22 besteht aus einem oberen Lenker 20', 22' und einem unteren Lenker 20", 22", die mit ihrem jeweiligen ersten Ende jeweils an einem oberen bzw. unteren Ende eines Achsrohrs, 21, 23 angebracht sind. Das Achsrohr 21, 23 ist am zugeordneten Längsträger 10, 11 des Rahmengrundkörpers 1 um die Längsachse des zugeordneten Längsträgers 10, 11 oder um eine dazu parallele Achse schwenkbar am Rahmengrundkörper 1 angebracht. Die beiden Lenker 20', 20" sowie 22', 22" der jeweiligen Radaufnahme 20, 22 sind an ihrem jeweiligen zweiten Ende miteinander verbunden und bilden dort jeweils eine Achsaufnahme 24, 25 zur Anbringung eines Rades 26, 27. Die Räder 26, 27 können entweder jeweils einzeln an der ihnen zugeordneten Achsaufnahme 24, 25 drehbar anbringbar sein. Alternativ kann ein Steckachsenkörper 28 vorgesehen sein, der durch die als Bohrung ausgebildeten Achsaufnahmen 24, 25 hindurchführbar ist und der an seinen jeweiligen Enden 28', 28" ausgebildet ist, um jeweils ein Rad 26, 27 aufzunehmen, so dass in dem in Fig. 1 dargestellten zusammengebauten ruhenden Betriebszustand A die Radaufhängungen 20, 22, die Steckachse 28 und die Räder 26, 27 ein Fahrwerk 2 der Transportvorrichtung bilden. Die Räder 26, 27 können entweder an der Steckachse 28 drehbar gelagert sein oder sie können fest an der Steckachse angebracht sein und die Steckachse 28 kann drehbar in den Achsaufnahmen 24, 25 gelagert sein.

Die Transportvorrichtung weist weiterhin einen Aufnahmebereich 3 für Atemgasflaschen 4 auf. Der Aufnahmebereich 3 für die Atemgasflaschen 4 wird nach unten begrenzt durch eine Bodenstützplatte 30, die mittels Scharniergelenken 31, 31', 31" am unteren Endquerholm 16 schwenkbar angebracht ist, so dass die Bodenstützplatte 30 zwischen der in Fig. 2 gezeigten Position, in der sich die Bodenplatte 30 im Wesentlichen in der Ebene E des Rahmengrundkörpers 1 befindet und der in Fig. 2 dargestellten Position, in der sich die Bodenstützplatte 30 in einem im Wesentlichen rechten Winkel zur Ebene E des Rahmengrundkörpers 1 erstreckt, verschwenkbar ist. Auf ihrer im ruhenden Betriebszustand A oberen Seite ist die Bodenstützplatte 30 mit zwei seitlich voneinander beabstandeten kreisrunden Ausnehmungen bzw. Vertiefungen 30', 30" versehen, die in ihrem Durchmesser dem Außendurchmesser einer Atemgasflasche angepasst sind, so dass die Atemgasflasche mit ihrem Bodenabschnitt in die entsprechende Ausnehmung bzw. Vertiefung 30', 30" eingesetzt werden kann und so gegen seitliches Verrutschen fixiert ist.

Des Weiteren sind am Rahmengrundkörper 1 Seitenwandelemente 32, 34 vorgesehen, die jeweils an einem zugeordneten Längsträger 10 bzw. 11 des Rahmengrundkörpers mittels Scharnierelementen 33, 33', 33"; 35, 35', 35" schwenkbar angebracht sind, so dass sie aus der in Fig. 2 dargestellten Lage, in der sie im Transport- und Lagerzustand B der Transportvorrichtung in der Ebene E liegen, in die in Fig. 1 dargestellte Position verschwenkbar sind, in der sie rechtwinklig zur Ebene E liegen. In dieser Position stoßen die Seitenwandelemente 32, 34 mit ihrem unteren Endabschnitt seitlich gegen die Bodenstützplatte 30, wo sie mittels in den Figuren nur schematisch gezeichneter Verbindungseinrichtungen 32', 32", 34', 34" mit der Bodenstützplatte 30 fest verbindbar sind. Im mit der Bodenstützplatte 30 verbundenen Zustand bestimmen der Rahmengrundkörper 1, die Bodenstützplatte 30 sowie die Seitenwandelemente 32, 34 den Aufnahmebereich 3 für die Atemgasflaschen 4. Zusätzlich können am Rahmengrundkörper 1 beispielsweise Riemen oder Spanngurte als Fixiereinrichtungen für die Atemgasflaschen 4 vorgesehen sein, um die Atemgasflaschen 4 in deren oberem Bereich zusätzlich gegen Kippen zu sichern.

Der obere Endquerholm 12 des Rahmengrundkörpers 1 ist bezüglich der Ebene E zu jener Seite der Ebene E leicht abgewinkelt, auf der die Räder 26, 27 im Betriebszustand A gelegen sind. Dazu können die Längsträger 10, 11 in ihrem oberen Abschnitt entweder in starrer Weise leicht abgewinkelt sein oder sie können in ihrem oberen Abschnitt jeweils ein Gelenk 18, 18' aufweisen, wobei die Gelenke 18, 18' eine gemeinsame Schwenkachse X₁ aufweisen, um welche der obere Teil der Längsträger 10, 11 zusammen mit dem oberen Endquerholm 12 aus der in Fig. 2 dargestellten ebenen Position in die in Fig. 1 dargestellte abgewinkelte Position verschwenkbar und in der jeweiligen Position arretierbar ist. Der obere Endquerholm 12 bildet so in der in Fig. 1 dargestellten Position zusammen mit den abgewinkelten oberen Abschnitten 10', 11' des jeweiligen Längsträgers 10, 11 ein Griffelement 12'.

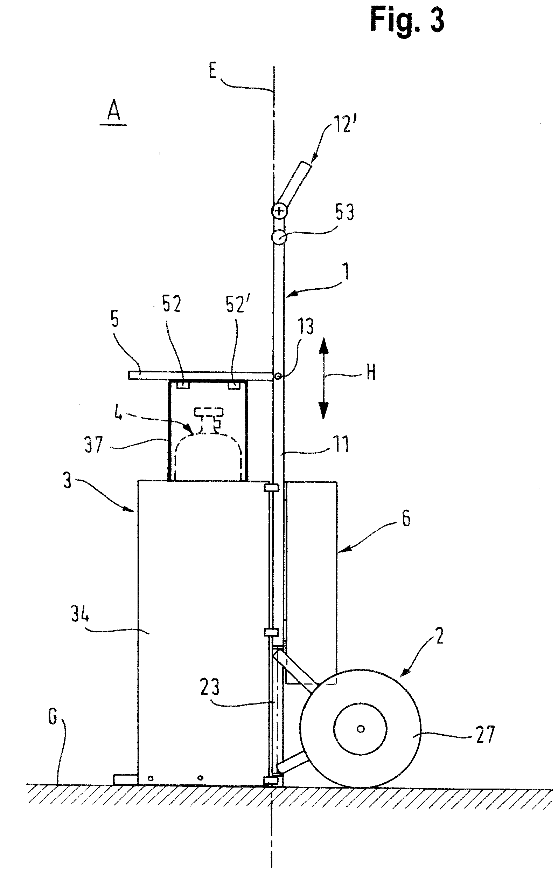

Oberhalb des Aufnahmebereichs für die Atemgasflaschen 4 ist eine Hilfsstützplatte 5 am zweitobersten Querholm 13 um eine Schwenkachse X₂ schwenkbar am Rahmengrundkörper 1 gelagert. Dazu kann der Querholm 13 dreh- oder schwenkbar an den Längsträgern 10, 11 gelagert oder lagerbar sein oder die Hilfsstützplatte 5 kann am drehfest mit dem Rahmengrundkörper 1 verbundenen oder verbindbaren Querholm 13 schwenkbar gelagert sein. Die Hilfsstützplatte 5 lässt sich um die Schwenkachse X₂ aus der in Fig. 2 dargestellten Position des Transport- und Lagerzustands B, in welchem sich die Hilfsstützplatte 5 im Wesentlichen in der Ebene E befindet, und der in Fig. 3 dargestellten Arbeitsposition verschwenken. In der Arbeitsposition erstreckt sich die Hilfsstützplatte 5 im Wesentlichen horizontal, also im in Fig. 3 - wie in Fig. 1 - gezeigten ruhenden Betriebszustand A rechtwinklig zur Ebene E des Rahmengrundkörpers 1. Die in die Arbeitsposition (Fig. 3) herausgeschwenkte Hilfsstützplatte 5 ist mittels U-förmig abgewinkelter Stützelemente 36, 37, die am jeweiligen Seitenwandelement 32, 34 schwenkbar gelagert sind, abgestützt, wozu die Stützelemente 36, 37 aus ihrer in Fig. 2 dargestellten Ruheposition, in der sie an der Innenseite des jeweiligen Seitenwandelements 32, 34 anliegen, um 180° nach oben verschwenkt werden und in entsprechende Rastelemente 50, 50', 52, 52', die an der Unterseite der Hilfsstützplatte 5 angebracht sind, eingerastet werden. Auf diese Weise bildet die Hilfsstützplatte 5 in der in Fig. 3 gezeigten Betriebsposition einen Tisch aus, auf dem beispielsweise die Atemgasflaschen 4 zur Übernahme auf den Rücken eines Tauchers abgestellt werden können. Des Weiteren kann dieser Tisch als Arbeitstisch für sonstige Tätigkeiten des Tauchers dienen.

Der zweitoberste Querholm 13, an welchem die Hilfsstützplatte 5 schwenkbar gelagert ist, kann in unterschiedlichen Höhen an oder in den Längsträgern 10, 11 des Rahmengrundkörpers 1 anbringbar sein, so dass die Höhe der Hilfsstützplatte 5 in der in Fig. 3 dargestellten Betriebsposition über der Standfläche G der aufrecht stehenden Transportvorrichtung verstellbar ist, wie in Fig. 3 durch den vertikalen Doppelpfeil H symbolisiert ist.

In dem in Fig. 2 dargestellten Transport- und Lagerzustand der Transportvorrichtung kann die Hilfsstützplatte 5 an ihrer von ihrer Schwenkachse X₂ abgewandten Seite mittels eines Fixierstifts oder anderer Fixiereinrichtungen 53 an einer oder beiden der Längsträger 10, 11 des Rahmengrundkörpers 1 fixiert werden.

Am Rahmgrundkörper 1 ist an dessen vom Aufnahmebereich 3 für die Atemgasflaschen 4 abgewandter Seite 1' ein Aufnahmebehälter 6 für weitere Gegenstände der Tauchsportausrüstung (z.B. Flossen, Lungenautomat, Bekleidung, Gewichte) abnehmbar angebracht. Der Aufnahmebehälter 6 ist im gezeigten Beispiel kastenartig ausgebildet, kann aber beispielsweise auch aus einem Textilmaterial oder einem Kunststoffplanenmaterial bestehen. Dieser Aufnahmebehälter 6 ist an seiner zum Rahmengrundkörper 1 weisenden Seite mit Haken 60, 61, 62, 63, 64 versehen, die nach unten offen sind und mit denen der Aufnahmebehälter 6 mit seinem oberen Ende und mit seinem unteren Ende in jeweils einen Querholm 14, 15 einhängbar ist. Durch diese Fixierung an zwei Querholmen wird verhindert, dass der Aufnahmebehälter 6 während der Fahrt mit der Transportvorrichtung, bei welcher die Ebene E gegenüber der Darstellung in Fig. 1 um einen Winkel im Uhrzeigersinn um die Achse der Räder 26, 27 herum geneigt ist, pendelt. Aufgrund der Hakenbefestigung kann der Aufnahmebehälter 6 schnell von der Transportvorrichtung abgenommen bzw. an deren Rahmengrundkörper 1 eingehängt werden.

Die vom Aufnahmebereich 3 für die Atemgasflaschen 4 abgewandte untere Fläche 30'" der Bodenstützplatte 30 erstreckt sich im zusammengebauten Betriebszustand A der Transportvorrichtung in einer Ebene E', die tangential zu den Rädern 26, 27 verläuft. In dem in Fig. 1 dargestellten ruhenden Betriebszustand A, in welchem die Transportvorrichtung aufrecht steht, verläuft die Ebene E' auf der Standfläche G, auf der die Transportvorrichtung steht. In diesem Zustand stützt sich die Transportvorrichtung somit sowohl auf den Rädern 26, 27 als auch auf der Bodenplatte 30 ab und besitzt somit einen stabilen Stand, der auch dann zuverlässig stabil ist, wenn auf der einen Arbeitstisch bildenden Hilfsstützplatte 5 in ihrer herausgeklappten Position (Fig. 3) schwere Lasten abgestellt sind. Beim Anlegen der auf der Hilfsstützplatte 5 stehenden Taucherausrüstung kann die in Fig. 3 gezeigte stehende Transportvorrichtung zusätzlich durch eine weitere Person gesichert werden, die die Transportvorrichtung am Griffelement 12' festhält, oder es können am Griffelement 12' der Transportvorrichtung zusätzliche Stützen anbringbar sein, um beispielsweise ein Kippen der Transportvorrichtung um die Drehachsen der Räder 26, 27 verhindern.

In einem alternativen Transport- und Lagerzustand können die Seitenwandelemente 32, 35 sowie die Bodenplatte 30 gegenüber der Darstellung in Fig. 2 auch um 180° an den Rahmengrundkörper herangeschwenkt werden, um eine kompakte, flache Transportposition einzunehmen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Rahmengrundkörper
- 1': abgewandte Seite
- 2: Fahrwerk
- 3: Aufnahmebereich
- 4: Atemgasflaschen
- 5: Hilfsstützplatte
- 6: Aufnahmebehälter
- 10: Längsträger
- 11: Längsträger
- 12: oberer Endquerholm
- 12': Griffelement
- 13: zweitoberster Querholm
- 14: Querholm
- 15: Querholm
- 16: unterer Endquerholm
- 18: Gelenk
- 18': Gelenk
- 20: Radaufhängung
- 20': oberer Lenker
- 20": unterer Lenker
- 21: Achsrohr
- 22: Radaufhängung
- 22': oberer Lenker
- 22": unterer Lenker
- 23: Achsrohr
- 24: Achsaufnahme
- 25: Achsaufnahme
- 26: Rad
- 27: Rad
- 28: Steckachsenkörper
- 28': Ende
- 28": Ende
- 30: Bodenstützplatte
- 30': Vertiefung
- 30": Vertiefung
- 30'": abgewandte unter Fläche
- 31: Scharniergelenk
- 31': Scharniergelenk
- 31": Scharniergelenk
- 32: Seitenwandelement
- 32': Verbindungseinrichtung
- 32": Verbindungseinrichtung
- 33: Scharnierelement
- 33': Scharnierelement
- 33": Scharnierelement
- 34: Seitenwandelement
- 34': Verbindungseinrichtung
- 34": Verbindungseinrichtung
- 35: Scharnierelement
- 35': Scharnierelement
- 35": Scharnierelement
- 36: Stützelement
- 37: Stützelement
- 50: Rastelement
- 50': Rastelement
- 52: Rastelement
- 52': Rastelement
- 53: Fixiereinrichtung
- 60: Haken
- 61: Haken
- 62: Haken
- 63: Haken
- 64: Haken

- A: Betriebszustand
- B: Transport- und Lagerzustand
- E: Ebene
- E': Ebene
- G: Standfläche
- X₁: Schwenkachse
- X₂: Schwenkachse

## Patentansprüche

1. Transportvorrichtung für Tauchsportausrüstung, die versehen ist mit einem im Wesentlichen ebenen Rahmengrundkörper (1), zumindest zwei Rädern (26, 27), und einer Bodenstützplatte (30) zum Abstützen von zumindest zwei in einem Aufnahmebereich (3) oberhalb der Bodenstützplatte (30) aufnehmbaren Atemgasflaschen (4) und vorzugsweise zumindest einer Fixiereinrichtung für die Atemgasflaschen (4), wobei eine erhöhte Positionierbarkeit der Atemgasflaschen (4) vorgesehen ist,
**dadurch gekennzeichnet,**
- **dass** die Transportvorrichtung zwischen einem Betriebszustand (A), in dem die Transportvorrichtung einen vorzugsweise einachsigen Transportwagen bildet, und einem Transport- und Lagerzustand (B) umbaubar ist, wozu die Räder (26, 27) am Rahmengrundkörper (1) abnehmbar anbringbar oder schwenkbar angebracht sind und wozu die Bodenstützplatte (30) am Rahmengrundkörper (1) abnehmbar anbringbar oder schwenkbar angebracht ist, und
- **dass** die Transportvorrichtung mit einer im Aufnahmebereich (3) für die Atemgasflaschen (4) oder unmittelbar oberhalb dieses Aufnahmebereichs (3) am Rahmengrundkörper (1) abnehmbar anbringbaren oder schwenkbar angebrachten Hilfsstützplatte (5) versehen ist.

2. Transportvorrichtung nach Anspruch 1,
**dadurch gekennzeichnet,**
**dass** die schwenkbar am Rahmengrundkörper (1) angebrachten Elemente (12', 20, 22, 30, 32, 34, 5) im Transport- und Lagerzustand (B) im Wesentlichen in der Ebene (E) des Rahmengrundkörpers (1) oder in einer dazu parallelen Ebene gelegen sind.

3. Transportvorrichtung nach Anspruch 1 oder 2,
**dadurch gekennzeichnet,**
**dass** zumindest ein am Rahmengrundkörper (1) anbringbares oder schwenkbar angebrachtes Griffelement (12') vorgesehen ist.

4. Transportvorrichtung nach einem der vorhergehenden Ansprüche,
**dadurch gekennzeichnet,**
**dass** zumindest ein am Rahmengrundkörper (1), vorzugsweise an dessen vom Aufnahmebereich (3) für die Atemgasflaschen (4) abgewandter Seite (1'), angebrachter oder anbringbarer Aufnahmebehälter (6) für weitere Gegenstände der Tauchsportausrüstung vorgesehen ist.

5. Transportvorrichtung nach einem der vorhergehenden Ansprüche,
**dadurch gekennzeichnet,**
**dass** sich die vom Aufnahmebereich (3) für die Atemgasflaschen (4) abgewandte Fläche (30'") der Bodenstützplatte (30) im Betriebszustand (A) der Transportvorrichtung in einer Ebene (E') erstreckt, die tangential zu den Rädern (26, 27) verläuft.

6. Transportvorrichtung nach einem der vorhergehenden Ansprüche,
**dadurch gekennzeichnet,**
**dass** sich die Bodenstützplatte (30) im Betriebszustand (A) der Transportvorrichtung in einem im Wesentlichen rechten Winkel zur Ebene (E) des Rahmengrundkörpers (1) erstreckt.

7. Transportvorrichtung nach einem der vorhergehenden Ansprüche,
**dadurch gekennzeichnet,**
**dass** die Hilfsstützplatte (5) in unterschiedlichen Höhen bezogen auf eine aufrecht stehende Transportvorrichtung anbringbar ist beziehungsweise dass die Schwenkachse der Hilfsstützplatte (5) in der Höhe verstellbar ist.

8. Transportvorrichtung nach einem der vorhergehenden Ansprüche,
**dadurch gekennzeichnet,**
**dass** sich die am Rahmengrundkörper (1) angebrachte Hilfsstützplatte beziehungsweise die aus einer Stauposition in eine Arbeitsposition ausgeschwenkte Hilfsstützplatte (5) bei auf einer Standfläche (G) aufrecht stehender Transportvorrichtung in einer Höhe von 60 cm bis 120 cm, vorzugsweise zwischen 75 cm und 100 cm, über der Standfläche (G) der Transportvorrichtung horizontal erstreckt.
